# EUROPEAN PATENT APPLICATION

(11) **EP 3 671 025 A1**
(43) Date of publication of application: **24.06.2020**
(21) Application number: 18212934.6
(22) Date of filing: 17.12.2018
(51) Int. Cl.: F21V 5/00, F21V 3/04, F21V 8/00, F21Y 105/00

(54) **A LIGHTING PANEL**

(71) Applicant: Signify Holding B.V., 5656 AE Eindhoven (NL)
(72) Inventor: The designation of the inventor has not yet been filed
(74) Representative: Verweij, Petronella Daniëlle

(57) **Abstract**

A lighting panel has an edge-lit light guide (20) and an additional output surface (28) mounted above an output surface of the light guide (20). The output surface (28) is curved so that it is more spaced at the edges than in the middle. This means the light from the light guide (20) is output over a larger area near the edges so that a desired uniformity can be achieved with fewer light sources, such as LEDs.

## Description

### FIELD OF THE INVENTION

This invention relates to lighting panels, for example for providing an area of illumination which then delivers light typically into an interior space.

### BACKGROUND OF THE INVENTION

Lighting panels are widely used as part of a modular ceiling structure.

Such panels now typically use LEDs to provide light to a light output surface. There is a continuous desire for increased efficiency so that fewer LEDs need to be used, while at the same time providing uniform illumination at the output surface of the panel for aesthetic reasons.

One known design for a LED-based lighting panel is to provide a direct-lit panel. A two-dimensional LED array delivers light in the intended direction, for example through a diffuser plate which hides the spot pattern of the underlying LED array.

Another known design for a LED-based lighting panel is to make use of a light guide plate to provide an edge-lit solution. For example, one dimensional LED arrays may be provided at opposite edges of a light guide plate. The light escapes from the plate at a light exit surface due to the interruption of total internal reflection within the light guide.

The optical efficiency of a direct-lit panel is higher, but it needs more LEDs to provide a uniformly illuminated light output surface. An edge-lit panel can use fewer LEDs to provide uniform illumination, but it has lower optical efficiency. The multiple reflections in the light guide cause a significant light loss.

There is therefore a need for a lighting panel based on the use of a light guide which enables a better compromise between lighting efficiency, lighting uniformity and the number of light sources (such as LEDs) needed.

### SUMMARY OF THE INVENTION

The invention is defined by the claims.

According to examples in accordance with an aspect of the invention, there is provided a lighting panel, comprising:
a light guide comprising a plate having a pair of opposite edges and a planar light guide output surface extending between the pair of opposite edges;
a light source arrangement providing light into the pair of opposite edges; and
a lighting panel light output surface mounted above the light guide output surface, comprising a curved surface which has a separation distance from the light guide output surface which is greatest (H) at the opposite edges and least (h) in a middle region between the opposite edges.

The lighting panel light output surface defines the illuminating output surface of the lighting panel, i.e. the output window of the lighting panel. As a result of the curvature of the lighting panel light output surface, and hence different angle with respect to the light guide output surface at different locations, a given area of the light guide output surface delivers light to a different amount of area of the lighting panel light output surface. This means that while creating a uniform light intensity per unit area at the lighting panel light output surface, an increased lighting efficiency is possible. In particular, a greater light intensity is needed near the opposite edges compared to the middle region. This means that the combined length of the light paths through the light guide is reduced because relatively more light output is needed near the edges. This reduces energy loss, so makes the lighting panel more efficient than a conventional planar edge-lit light guide system.

A flat surface reflects sound and causes echoes, giving noise issues. The lighting panel light output surface is curved and this reduces echoes, and absorbs more sound than a flat surface.

The space between the light guide output surface and the lighting panel light output surface functions as a mixing chamber. This enables the appearance of the light guide to be hidden and the panel to have a uniform appearance.

The lighting panel light output surface may be curved about one direction only, which is parallel to the opposite edges.

The lighting panel light output surface may for example be a generally planar sheet which is bent about one axis only into the required curved shape.

An effective radius of curvature of the lighting panel light output surface is for example in the range 500 mm to 1000 mm. For this purpose, the bending strength is for example in the range 100 MPa -120 MPa. The bending elastic modulus is for example in the range 2.0 GPa -2.5 GPa.

The light source arrangement for example comprises a first LED array at one of the opposite edges and a second LED array at the other of the opposite edges. Thus, the light guide is edge-lit from opposite edges. The first and second LED arrays may have one or more rows of LEDs.

The ratio between the separation distance, H, at the edges to the separation distance, h, in the middle is for example in the range 1<=H/h<=5, for example 1<=H/h<=2.

This ratio defines the curvature. The ratio is for example dependent on the size of the panel.

The separation distance, h, in the middle is for example at least 15 mm. This minimum separation for example applies to all different panel sizes. It ensures that a light mixing function takes place.

The separation distance, H, at the opposite edges is for example less than 70 mm (for a large 600 mm nominal width panel), for example less than 35 mm (for a small 300 mm nominal width panel). The separation distance again may thus depend on the size of the panel.

The width of the lighting panel, between the edges, is for example in the range 550 mm to 600 mm or 270 mm to 300 mm. These are two standard width sizes for modular lighting panel solutions.

The lighting panel may be square or rectangular. Common sizes are for example nominal sizes of 300 mm x 1200 mm and 600 mm x 600 mm. Thus, the invention is particularly suitable for a panel lighting system such as for recessed ceiling lighting.

The light guide for example comprises a light extracting pattern at a surface opposite and facing the light guide output surface.

This is one low cost way to implement the light guide, for example with painted or printed spots defining the pattern, at the locations at which total internal reflection is interrupted.

Other ways of letting the light escape from the light guide plate could of course also be used, such as modifications to the shape so that the output surface is no longer a planar surface, or reflecting prisms on the surface which faces the light guide output surface. Thus, various different light guide designs may be used.

The lighting panel light output surface may comprise a diffusing layer.

This is used to make the light output more uniform. This can be used to reduce glare, such as a reduce unified glare rating (UGR).

The lighting panel light output surface may comprise an array of microlenses. A microlens array may have a higher transmission than a general diffuser plate. The microlenses may be used to perform a diffusing function or they may be used in addition to a diffuser.

Each micro lens for example has radius in the range 0.05 mm to 0.1 mm.

The microlenses are thus small so that they are not individually visible (at least not from a general viewing distance) and they are compactly arranged. The microlens array may be an ordered array or a disordered array.

The light output surface is for example polycarbonate, which gives the desired strength, flexibility and optical transmission characteristics.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a known lighting panel comprising an edge-lit light guide;
Figs. 2A to 2C show a lighting panel in accordance with the invention;
Fig. 3 shows the shape of the panel of Figure 2 more clearly in cross sectional side view;
Fig. 4 shows the surface of the lighting panel light output surface having an array of microlenses;
Fig. 5 shows an example of a surface pattern used by the light guide;
Fig. 6 shows the intensity distribution for a direct-lit panel;
Fig. 7 shows the uniformity of the light output as a function of position over the panel surface for the direct-lit panel;
Fig. 8 shows the intensity distribution for a conventional edge-lit panel;
Fig. 9 shows the uniformity of the light output as a function of position over the panel surface for the conventional edge-lit panel;
Fig. 10 shows the intensity distribution for the panel of the invention;
Fig. 11 shows the uniformity of the light output as a function of position over the panel surface for the panel of the invention;
Fig. 12 shows how a flat surface reflects sound and causes echoes; and
Fig. 13 shows how a curved surface reduces echoes as a result of multiple reflections.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a lighting panel having an edge-lit light guide and an additional output surface mounted above an output surface of the light guide. The output surface is curved so that it is more spaced at the edges than in the middle. This means the light from the light guide is output over a larger area near the edges so that a desired uniformity can be achieved with fewer light sources, such as LEDs.

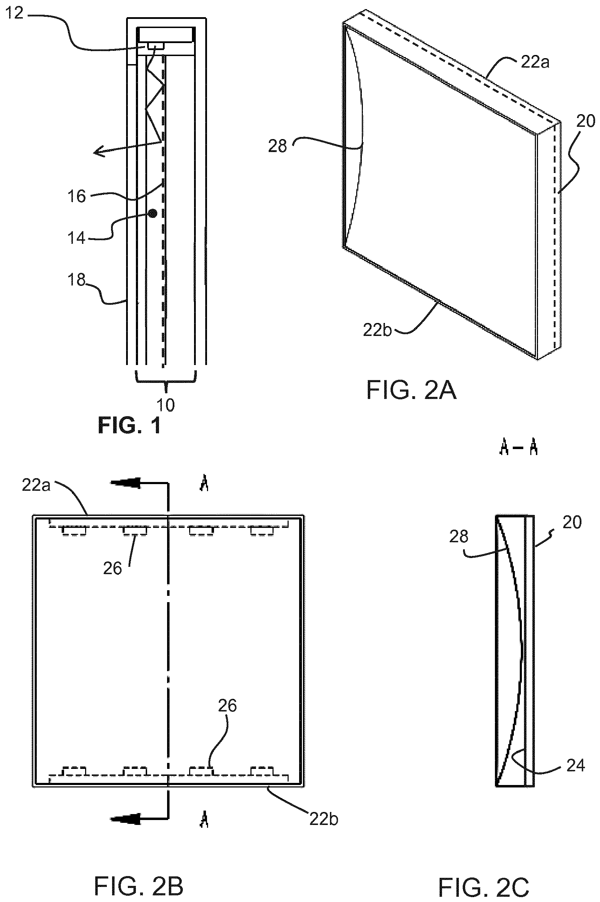

Figure 1 shows a known lighting panel comprising a light guide 10 into which light is provided by an LED array 12 along opposite edges (only one edge is shown in Figure 1). The light enters a cavity 14 in which it experiences multiple total internal reflections. A surface pattern 16 interrupts the total internal reflections and provides a light output to a light output window 18 which may include a diffuser plate.

Figure 2 shows in schematic form a lighting panel in accordance with the invention, comprising a light guide 20 comprising a plate having a pair of opposite edges 22a, 22b and a planar light guide output surface 24 extending between the pair of opposite edges. A light source arrangement 26 provides light into the pair of opposite edges.

A lighting panel light output surface 28 is mounted above the light guide output surface, comprising a curved surface which has a separation distance from the light guide output surface 24 which is greatest at the opposite edges and least in a middle region between the opposite edges.

Figure 2A shows a perspective view, Figure 2B shows a plan view and Figure 2C shows a cross section through the line A-A of Figure 2B. The light source arrangement is internal to the panel and is only shown in Figure 2B.

The lighting panel light output surface 28 defines the illuminating output surface of the lighting panel, i.e. the output window of the lighting panel. As a result of the curvature of the lighting panel light output surface 28, and hence different angle with respect to the light guide output surface, a given area of the light guide output surface delivers light to a differently sized area of the lighting panel light output surface.

A greater light intensity is needed near the edges compared to the middle region because the angle is steeper. This means that the combined length of the light paths through the light guide is reduced because relatively more light output is needed near the edges. This reduces energy loss, so makes the lighting panel more efficient than a conventional planar edge-lit light guide system.

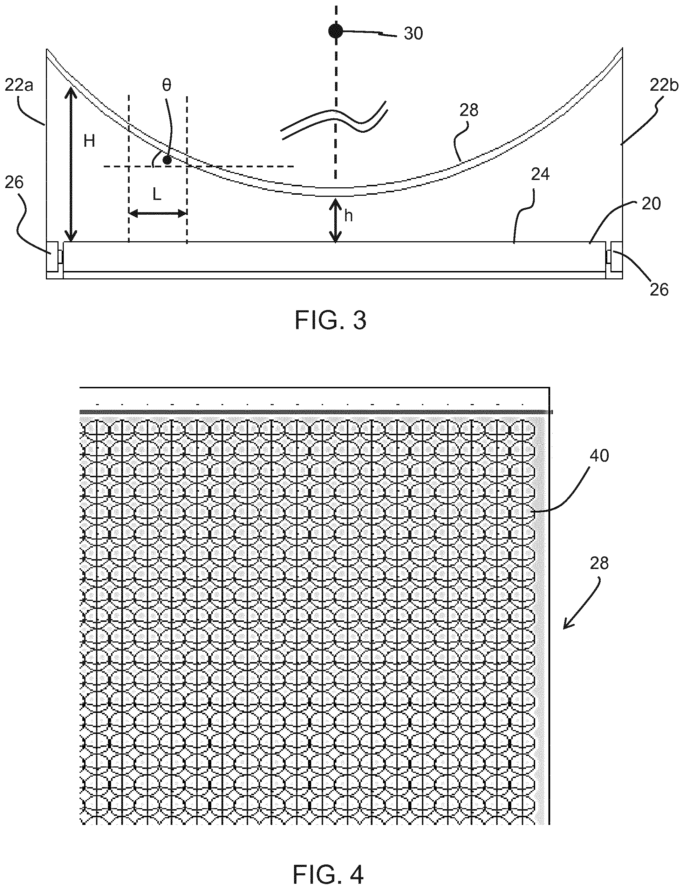

Figure 3 shows the shape more clearly in cross sectional side view.

For a given length L over the output surface of the light guide in the cross section shown, the corresponding length along the light output surface 28 is L*secθ where θ is the angle of the light output surface 28 to the plane of the light guide, and sec means secant (1/cosine).

The angle θ varies with position, and is zero in the middle where the height is h and is maximum at the edge where the height is H.

The lighting panel light output surface is for example curved about one direction only represented by the point 30, which is parallel to the opposite edges 22a, 22b (and parallel to the light guide surface). The axis of curvature is in fact some distance above the panel, so point 30 is only schematic. The lighting panel light output surface may for example be a generally planar sheet which is bent about that axis only into the required curved shape.

This curvature means that the shape is constant in the direction along the edges, i.e. constant in all planes perpendicular to the plane of the page of Figure 3. However, this is not essential, and it may have a more complex 3D curvature.

The angle θ (and in particular secθ) thus provides an area conversion from an area of the light guide output surface to an area of the lighting panel light output surface. At the edges, the light is more spread out across the area of the lighting panel light output surface 28, so a higher intensity of light needs to be provided to those regions of the lighting panel light output surface than to the middle. Thus, an increased proportion of the light undergoes few internal reflections, giving an increase in efficiency.

The air space between the light guide output surface and the lighting panel light output surface functions as a mixing chamber.

As shown in Figure 2, the panel is typically square, for example with a nominal size of 600 mm x 600 mm, i.e. within a modular system the panel pitch is 600 mm. The light guide for example has dimensions of 576 mm x 576 mm (so there is a 12 mm surround for fixing purposes).

Returning to Figure 3, the minimum spacing h is for example 15 mm or more and the maximum spacing is for example 70 mm or less. The minimum spacing h is desired to hide the light extraction spots of the light guide plate. The maximum spacing H is desired to avoid the panel becoming too thick and also to balance the uniformity and the glare reduction properties.

This gives a ratio between the separation distance, H, at the edges to the separation distance, h, in the middle in the range 1<=H/h<=5. Taking 15 mm and 70 mm, this 55 mm difference in height over the 576mm width corresponds to a radius of curvature of 780 mm (so that the location of the axis 30 in Figure 3 is only schematic). This assumes a constant radius of curvature, whereas the curvature of the lighting panel light output surface does not need to have a constant radius of curvature.

For a narrower panel, for example with nominal width of 300 mm (e.g. 1200 mm x 300 mm) the height difference is less for the same general curvature. For example with a separation h of 15 mm or more, the maximum spacing may be 30 mm or less. Taking 15 mm and 30 mm for a panel width of 300 mm, this 15 mm difference in height over the 300 mm width corresponds to a radius of curvature of 760 mm. In this case, the ratio between the separation distance, H, at the edges to the separation distance, h, in the middle is in the range 1<=H/h<=2.

Thus, the effective radius of curvature (by which is meant the radius when the shape is approximated by a curve of constant radius) is for example greater than 500 mm to allow easy bending, for example in the range 500mm to 1000mm.

To enable bending into this curved shape from an initially flat sheet, there is for example a bending strength in the range 100 MPa -120 MPa. The bending elastic modulus is for example in the range 2.0 GPa -2.5 GPa.

Figure 4 shows the surface of the lighting panel light output surface, and shows that in one example it is formed as an array of microlenses 40 formed as a polycarbonate sheet (although other materials may be used). The microlenses perform a diffusing function, and they may be provided as well as, or instead of, a separate diffusing layer. An alternative option is to use a conventional diffuser.

The micro lens array reduces glare by suppressing high angle light, such as reducing a unified glare rating (UGR). Each microlens 40 for example has radius in the range 0.05 mm to 0.1 mm.

The micro lenses are thus small so that they are not individually visible (at least not from a general viewing distance) and they are compactly arranged. The microlens array may be an ordered regular array as shown or a disordered array.

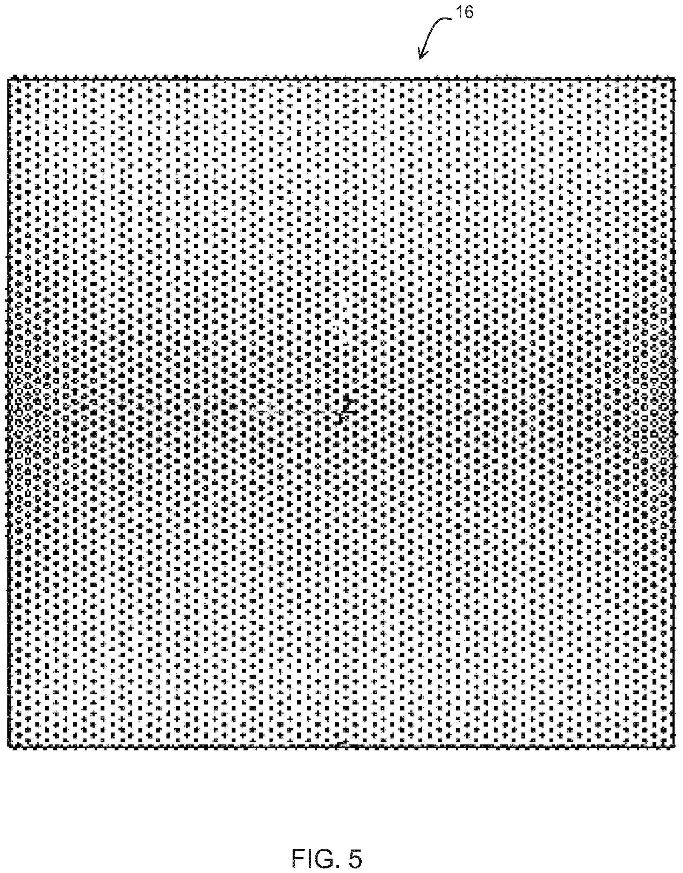

In the example shown, a surface dot pattern 16 is used to interrupt total internal reflection in the light guide. Figure 5 shows an example of the surface pattern. The orientation is with the light sources at the sides.

It comprises an array of dots. The density and/or size of dots at any particular location dictates the amount of light allowed to escape. The invention allows an increased dot density near the edges where the illumination light enters (i.e. the sides as viewed in Figure 5), so that a greater proportion of the light escapes with fewer internal reflections, hence increasing the efficiency.

Simulations have been performed to show the change in performance compared to a direct-lit panel and a conventional edge-lit panel.

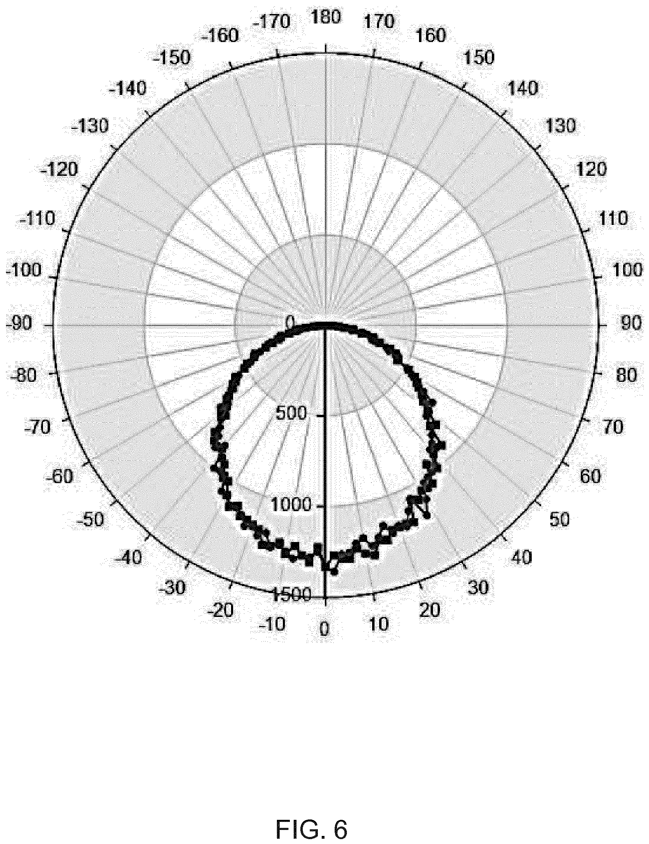

Figure 6 shows the intensity distribution for a direct-lit panel. There are two plots for two orthogonal planes, but they largely overlap.

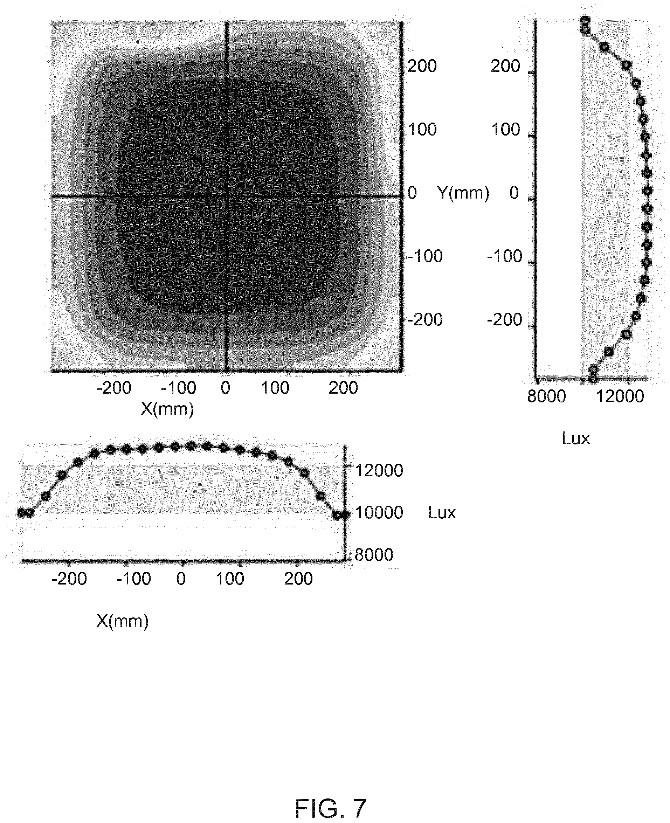

Figure 7 shows the uniformity of the light output as a function of position over the panel surface. It shows an image representation of the light output (where different shades of grey represent different light intensity) as well as graphical representations of the illumination intensity in two orthogonal directions across the panel.

For Figures 6 and 7, the efficiency is relatively high at 79.490%, with a total collected power of 3672.5 lm and a maximum intensity of 1394.1 cd. There is a uniformity of 69.32% and a glare rating (UGR) of 21.4.

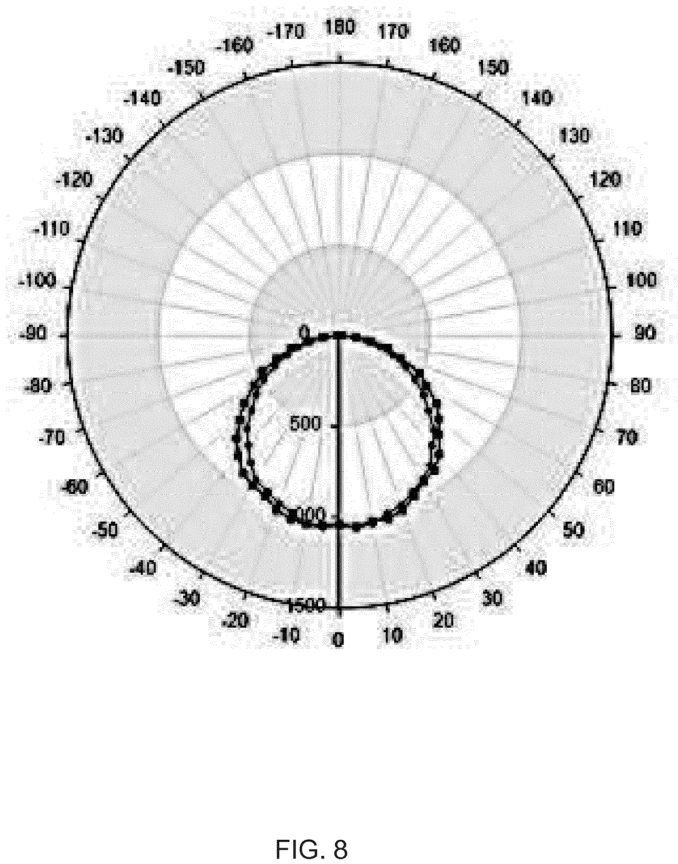

Figure 8 shows the intensity distribution for a conventional edge-lit panel. There are again two plots for two orthogonal planes, but they largely overlap.

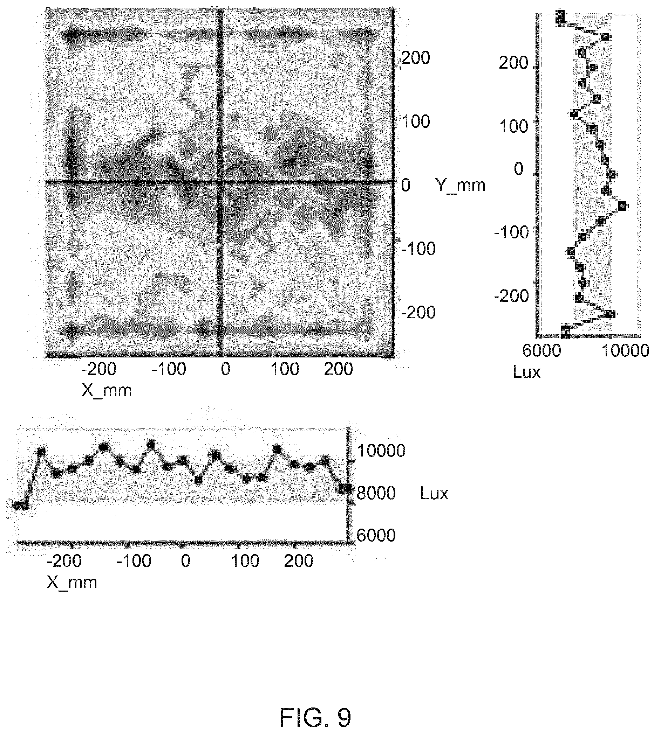

Figure 9 shows the uniformity of the light output as a function of position over the panel surface, in the same format as Figure 7. The light sources are at the side edges.

For Figures 8 and 9, the efficiency is relatively lower at 71.219%, with a total collected power of 3290.3 lm and a maximum intensity of 1074.7 cd. There is a better uniformity of 78.1% but a worse glare rating (UGR) of 22.2.

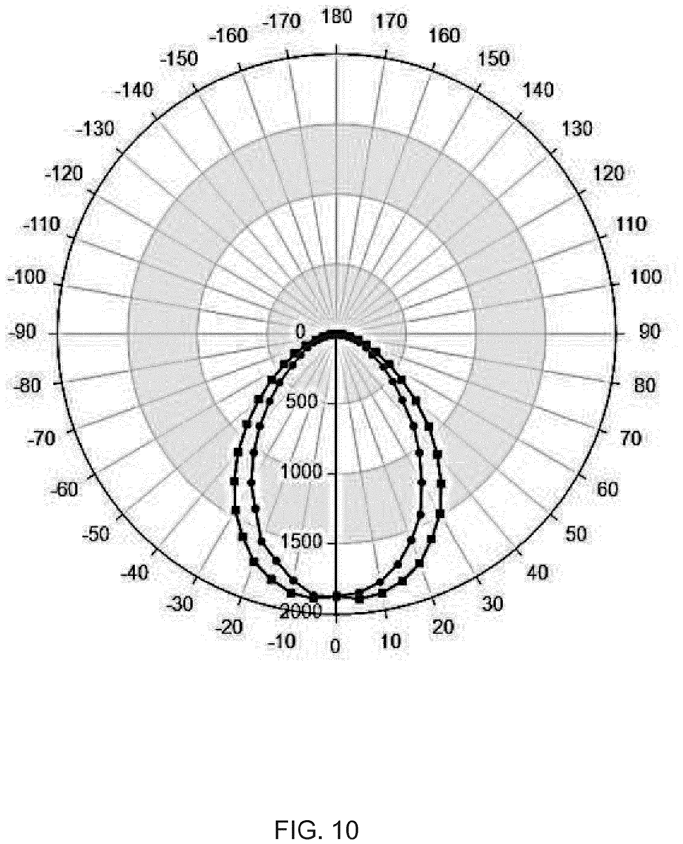

Figure 10 shows the intensity distribution for the panel described above. There are again two plots for two orthogonal planes.

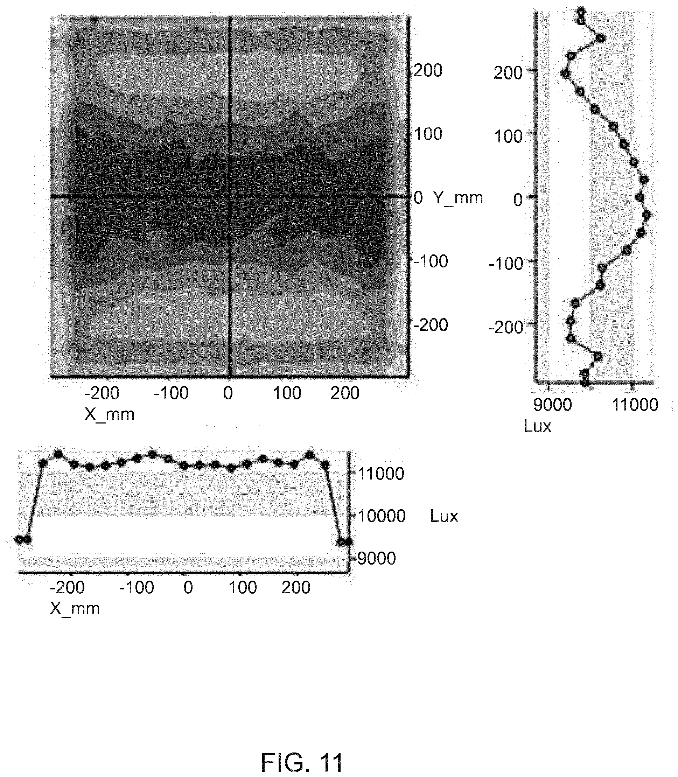

Figure 11 shows the uniformity of the light output as a function of position over the panel surface, in the same format as Figure 7 and again the light sources are at the side edges.

For Figures 10 and 11, the efficiency has increased to 76.855%, with an increased total collected power of 3550.7 lm and an increased maximum intensity of 1929.7 cd. The uniformity is improved to 84.9% and the UGR is reduced to 18.4 in particular by making use of the micro lens array.

These simulations are all for the same number of LEDs (132) each with the same lumen output (35 lm), and the same PCB and housing reflection properties.

The invention may be used to enable a reduction in the number of LEDs to achieve given output properties, or it may be used to improve the light output properties.

The curved surface of the lighting panel light output surface also gives benefits for noise reduction.

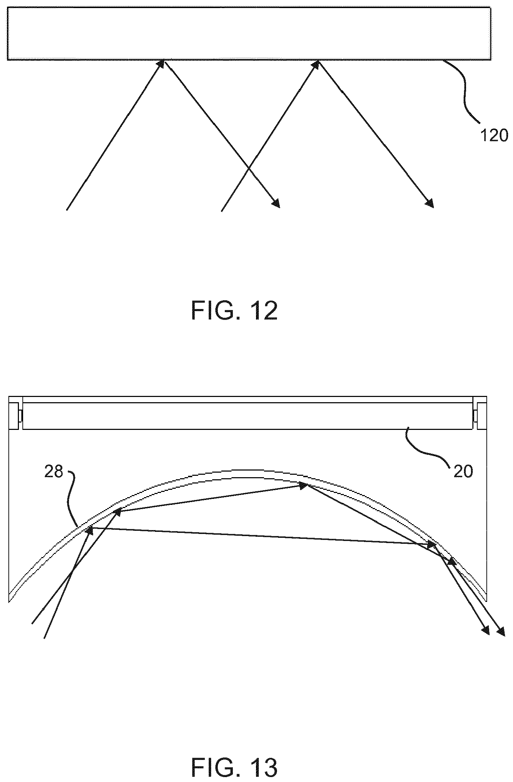

As shown in Figure 12, a flat surface 120 reflects sound and causes echoes, giving noise issues. The curvature of the lighting panel light output surface as shown in Figure 13 reduces echoes as a result of multiple reflections as schematically shown.

The examples above are based on a light extraction pattern such as a pattern of printed dots on a back surface of the light guide. This is only one way to implement the light guide. Other ways of letting the light escape from the light guide plate could of course also be used, such as surface shape modifications (e.g. reflecting prisms).

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A lighting panel, comprising:
a light guide (20) comprising a plate having a pair of opposite edges (22a, 22b) and a planar light guide output surface (24) extending between the pair of opposite edges;
a light source arrangement (26) providing light into the pair of opposite edges; and
a lighting panel light output surface (28) mounted above the light guide output surface, comprising a curved surface which has a separation distance from the light guide output surface which is greatest (H) at the opposite edges and least (h) in a middle region between the opposite edges.

2. A lighting panel as claimed in claim 1, wherein the lighting panel light output surface (28) is curved about one direction only, which is parallel to the opposite edges.

3. A lighting panel as claimed in claim 1 or 2, wherein the light source arrangement (26) comprises a first LED array at one of the opposite edges and a second LED array at the other of the opposite edges.

4. A lighting panel as claimed in any one of claims 1 to 3, wherein the ratio between the separation distance, H, at the edges to the separation distance, h, in the middle is in the range 1<=H/h<=5, for example 1<=H/h<=2.

5. A lighting panel as claimed in any one of claims 1 to 4, wherein the separation distance, h, in the middle is at least 15 mm.

6. A lighting panel as claimed in any one of claims 1 to 5, wherein the separation distance, H, at the opposite edges is less than 70 mm, for example less than 35 mm.

7. A lighting panel as claimed in any one of claims 1 to 6, wherein the width of the lighting panel, between the edges, is in the range 550 mm to 600 mm or 270 mm to 300 mm.

8. A lighting panel as claimed in any one of claims 1 to 7, wherein an effective radius of curvature of the lighting panel light output surface is in the range 500 mm to 1000 mm.

9. A lighting panel as claimed in any one of claims 1 to 8, wherein the lighting panel is square.

10. A lighting panel as claimed in any one of claims 1 to 8, wherein the lighting panel is rectangular.

11. A lighting panel as claimed in any one of claims 1 to 10, wherein the lighting panel light output surface comprises a diffusing layer.

12. A lighting panel as claimed in claim 11, wherein the lighting panel light output surface (28) comprises an array of microlenses (40).

13. A lighting panel as claimed in any one of claims 1 to 12, wherein each microlens has radius in the range 0.05 mm to 0.1 mm.

14. A lighting panel as claimed in any one of claims 1 to 13, wherein the light output surface is polycarbonate.
